# EUROPEAN PATENT SPECIFICATION

(11) **EP 4 438 368 B1**
(45) Date of publication and mention of the grant of the patent: **07.05.2025**
(21) Application number: 23166121.6
(22) Date of filing: 31.03.2023
(51) Int. Cl.: B60K 15/03, B29C 49/42, B29L 31/00, B29C 49/20, B29C 49/48

(54) **THERMOPLASTIC TANK AND METHOD FOR MANUFACTURING THE THERMOPLASTIC TANK**
THERMOPLASTISCHER BEHÄLTER UND VERFAHREN ZUR HERSTELLUNG DES THERMOPLASTISCHEN BEHÄLTERS
RÉSERVOIR EN MATIÈRE THERMOPLASTIQUE ET PROCÉDÉ DE FABRICATION DU RÉSERVOIR EN MATIÈRE THERMOPLASTIQUE

(43) Date of publication of application: 02.10.2024
(73) Proprietor: Plastic Omnium Advanced Innovation And Research, 1130 Bruxelles (BE)
(72) Inventor: KIM, Tae-Gwon, 1130 BRUXELLES (BE)
(74) Representative: LLR

(56) References cited:
- EP-A1- 4 000 861
- WO-A1-2008/138869
- US-A1- 2021 283 820

## Description

The present invention relates to a blow moulding tool and a method for manufacturing a thermoplastic tank for a vehicle, preferably a thermoplastic fuel tank for a vehicle.

Liquid systems on board of vehicles generally comprise a thermoplastic tank for storing a liquid, said tank comprising at least one internal component, such as for example a baffle, which may be voluminous.

Conventionally, thermoplastic tanks for vehicles are obtained by extrusion blow moulding of a closed tubular parison, the internal component being introduced into the thermoplastic tank and attached to it during the manufacturing of the thermoplastic tank.

However, the current manufacturing methods have a limit on the shape of the internal component because it needs to be inserted into the closed tubular parison during the blow moulding process without causing any damage to the closed tubular parison. The method for manufacturing the thermoplastic tank for a vehicle thereof is known for example from WO 2008138869 A1.

The inserted component needs to keep clearance to the closed tubular parison during insertion process to ensure that it is properly positioned and does not interfere with the expansion of the closed tubular parison. If the component is too large or too thick, it can cause the closed tubular parison to bulge or wrap, resulting in an improperly shaped thermoplastic tank. Additionally, if the component is too close to the walls of the closed tubular parison, it can create uneven pressure during the blow moulding process, which can lead to defects in the manufactured thermoplastic tank

The present invention proposes a solution to address the aforementioned problems.

According to a first aspect of the present invention, there is provided a blow moulding tool for manufacturing a thermoplastic tank for a vehicle, preferably a thermoplastic fuel tank for a vehicle.

The blow moulding tool for manufacturing a thermoplastic tank for a vehicle, preferably a thermoplastic fuel tank for a vehicle, according to the invention comprises:
▪ at least one insertion pin configured to position at least one component through an opening at a first distal end of a closed tubular parison;
▪ a mould configured to receive the closed tubular parison, wherein the mould comprises at least
   - a first mould portion and a second mould portion and the mould portions each comprise a cavity with at least one welding means;
   - a first displaceable spacer arranged on a periphery of the cavity of the first mould portion;
   - a second displaceable spacer arranged on a periphery of the cavity of the second mould portion;
   - wherein the first displaceable spacer and the second displaceable spacer configured to move into each of a first position, a second position and a third position on an axis substantially perpendicular to an extrusion direction of the closed tubular parison;
   - the first position corresponding to the blow moulding tool being open;
   - the second position corresponding to the blow moulding tool being partially-open, and the third position corresponding to the blow moulding tool being closed;
   - when the blow moulding tool is partially-open, the first displaceable spacer and the second displaceable spacer are configured to receive a third displaceable spacer in a region between the first displaceable spacer and the second displaceable spacer, and
   - wherein the third displaceable spacer comprises a first displaceable half and a second displaceable half, the third displaceable spacer being configured to surround the at least one insertion pin and to create a void space inside the closed tubular parison allowing the at least one insertion pin to move and be positioned into alignment with the at least one welding means present in each cavity of the first mould portion and the second mould portion.

The term "closed tubular parison" in terms of the invention refers to a tube being open at a first distal end and closed at a second distal end. The first distal end and the second distal end are situated away from the central part of said tube.

The expression "closed at a second distal end" as used herein is intended to mean that the second distal end of the closed tubular parison is to be sealed by an extrusion head or any other suitable devices, or by welding of the walls of the closed tubular parison at the second distal end.

The expression "the mould portions each comprise a cavity" should be understood as meaning a hollow inside the first mould portion and the second mould portion, respectively. This cavity corresponds to the external surface of the thermoplastic tank to be produced.

According to the present invention, the at least one component is inserted into the closed tubular parison through a vertical movement, said movement being parallel to an extrusion direction of the closed tubular parison.

In the context of the present invention, the expression "periphery of the cavity" refers to the outer edge or boundary of the cavity of the first and second mould portions. When the two mould portions are brought together:
- the first displaceable spacer is located at the joining surface or edge of this joint surface of the first mould portion. In other words, the first displaceable spacer is positioned along the periphery of the cavity in the first mould portion, which is adjacent to the joining surface;
- the second displaceable spacer is located at the joining surface or edge of this joint surface of the second mould portion. In essence, the second displaceable spacer is positioned along the periphery of the cavity in the second mould portion, which is adjacent to the joining surface.

In this invention, the expression "joining surface" is intended to indicate the surface of the mould where the two mould portions meet or come together to form a seal of the manufactured thermoplastic tank.

The first displaceable spacer and the second displaceable spacer may be configured to move into each of a first position, a second position and a third position on an axis substantially perpendicular to an extrusion direction of the closed tubular parison. The term "substantially" is used to indicate that the first and second displaceable spacers may be configured to move into open, partially-open and closed positions along an axis that is oriented at an angle between 85 and 95 degrees relative to the extrusion direction of the closed tubular parison.

The first position may correspond to the blow moulding tool being open, the second position may correspond to the blow moulding tool being partially-open, and the third position may correspond to the blow moulding tool being closed.

When the blow moulding tool is partially-open, the first displaceable spacer and the second displaceable spacer may be configured to receive a third displaceable spacer in a region between the first displaceable spacer and the second displaceable spacer. The third displaceable spacer may comprise a first displaceable half and a second displaceable half, being configured to surround the at least one insertion pin and to create a void space inside the closed tubular parison allowing the at least one insertion pin to move and be positioned into alignment with the at least one welding means present in each cavity of the first mould portion and the second mould portion.

Within the framework of the invention, the mould used to form the thermoplastic tank comprises the first mould portion and the second mould portion that can be positioned relative to each other. The mould can be in an open, partially-open or closed position.

The open position of the mould refers to a configuration in which the first mould portion and the second mould portion are fully separated from each other, allowing for the insertion of the closed tubular parison into the mould cavity. In this position, the mould portions are at their maximum distance from each other, providing ample space for the placement of the closed tubular parison.

The partially-open position of the mould refers to a configuration in which the first mould portion and the second mould portion are positioned at a predetermined distance from each other, allowing for the insertion of the third displaceable spacer between them. In this position, the distance between the mould portions is less than the distance between them when the mould is in the open position, but greater than the distance between them when the mould is in the closed position. The predetermined distance may be adjustable or fixed and may be determined based on the desired size and shape of the final product.

The closed position of the mould refers to a configuration in which the first mould portion and the second mould portion are brought together to form a sealed cavity around the closed tubular parison. In this position, the mould portions are in intimate contact with each other, forming the final shape of the thermoplastic fuel tank.

The blow moulding tool of the present invention aims to create a thermoplastic fuel tank using a closed tubular parison that is smaller than what is typically used in traditional blow moulding processes. By reducing the size of the parison, the amount of material used is also reduced while still achieving the desired shape and volume of the final product. Overall, the blow moulding tool offers a cost-effective and sustainable solution for producing thermoplastic fuel tanks.

According to a preferred embodiment, the blow moulding tool according to the invention is such that the at least one insertion pin may be configured to position a plurality of components through the opening at the distal end of the closed tubular parison. The ability to incorporate multiple components simultaneously into the mould increases production efficiency and reduces costs.

According to a preferred embodiment, the blow moulding tool according to the invention is such that the at least one component may have a length equal to or less than the diameter of the closed tubular parison, so as to fit into the at least one insertion pin. This allows for easier insertion of component into the parison, as there is less risk of component getting stuck or damage during insertion. The at least one component can be any one of the following: a pillar, a baffle, a carrier, or a valve, but in a particular preferred embodiment, the at least one component is a pillar. For example, the pillar can provide a reinforcement to the blow moulding tool, which can help to prevent deformation and improve the quality of the thermoplastic fuel tanks produced.

According to a preferred embodiment, the blow moulding tool according to the invention is such that when the blow moulding tool is partially-open, a distance between the first displaceable spacer to the first mould portion may be at least twice a gap between the at least one component and the at least one welding means. When the mould is in the partially-open position with the first displaceable spacer fully extracted out, a weld pad of the component should not touch a weld pad of the tank shell, and there should be enough space to move the component inside the tool. This leads to a higher quality final product.

According to a preferred embodiment, the blow moulding tool according to the invention is such that when the blow moulding tool is partially-open, a distance between the second displaceable spacer to the second mould portion is twice a gap between the at least one component and the at least one welding means. When the mould is in the partially-open position with the second displaceable spacer fully extracted out, a weld pad of the component should not touch a weld pad of the tank shell, and there should be enough space to move the component inside the tool. This leads to a higher quality final product.

Within the scope of the invention, the distance between the first displaceable spacer and the first mould portion may be the same as the distance between the second displaceable spacer and the second mould portion. However, in some cases, it may be appropriate to use different spacer lengths on each side of the tool, in order to achieve the desired distance between the mould portions and the components. For example, if the component being inserted into the tool is asymmetrical, a different spacer length may be required on each side of the tool, in order to ensure that the component is positioned correctly.

According to a second aspect of the present invention, there is provided a method for manufacturing a thermoplastic tank for a vehicle, preferably a thermoplastic fuel tank for a vehicle.

The method according to the invention comprises at least the steps of:
▪ providing a closed tubular parison with an opening at a first distal end;
▪ placing the closed tubular parison between a first mould portion and a second mould portion of a mould, wherein the first mould portion and the second mould portion each comprise a cavity with at least one welding means;
▪ inserting at least one insertion pin through the opening of the distal end of the closed tubular parison, wherein the at least one insertion pin comprises at least one component to be positioned in the closed tubular parison;
▪ moving a first displaceable spacer arranged on a periphery of the cavity of the first mould portion and moving a second displaceable spacer arranged on a periphery of the cavity of the second mould portion into a first position on an axis substantially perpendicular to an extrusion direction of the closed tubular parison, wherein the first position corresponds to the blow moulding tool being open;
▪ moving the first displaceable spacer arranged on the periphery of the cavity of the first mould portion and moving the second displaceable spacer arranged on the periphery of the cavity of the second mould portion into a second position on the axis substantially perpendicular to the extrusion direction of the closed tubular parison, wherein the second position corresponds to the blow moulding tool being partially-open;
▪ arranging a third displaceable spacer in a region between the first displaceable spacer and the second displaceable spacer when the blow moulding tool is partially-open, and moving the at least one insertion pin into alignment with the at least one welding means present in each cavity of the first mould portion and the second mould portion;
▪ performing a first blowing of the closed tubular parison;
▪ removing the third displaceable spacer from the at least one insertion pin;
▪ positioning the at least one component towards the at least one welding means;
▪ moving the first displaceable spacer and the second displaceable spacer farther apart from each other on the axis substantially perpendicular to the extrusion direction of the closed tubular parison;
▪ welding the at least one component to the closed tubular parison;
▪ removing the at least one insertion pin from the closed tubular parison;
▪ moving the first displaceable spacer arranged on the periphery of the cavity of the first mould portion and moving the second displaceable spacer arranged on the periphery of the cavity of the second mould portion into a third position on the axis substantially perpendicular to the extrusion direction of the closed tubular parison, wherein the third position corresponds to the blow moulding tool being closed.

In a preferred embodiment of the invention, the method for manufacturing a thermoplastic tank for a vehicle, preferably a thermoplastic fuel tank for a vehicle, may comprise the steps of: (a) providing a closed tubular parison with an opening at a distal end; (b) placing the closed tubular parison between a first mould portion and a second mould portion of a mould, wherein the first mould portion and the second mould portion each may comprise a cavity with at least one welding means; (c) inserting at least one insertion pin through the opening of the distal end of the closed tubular parison, wherein the at least one insertion pin may comprise at least one component to be positioned in the closed tubular parison and (d) moving a first displaceable spacer arranged on a periphery of the cavity of the first mould portion and moving a second displaceable spacer arranged on a periphery of the cavity of the second mould portion into a first position on an axis substantially perpendicular to an extrusion direction of the closed tubular parison, wherein the first position may correspond to the blow moulding tool being open.

The present invention provides a method for manufacturing a thermoplastic tank for a vehicle, preferably a thermoplastic fuel tank for a vehicle, comprising steps (b), (c) and (d), which can be performed in any order, or even simultaneously. For example, step (b) and step (c) can be performed simultaneously, or step (c) can be performed before or after step (b). The order in which these steps are performed is not fixed, allowing for flexibility in the implementation of the method. However, the preferred embodiment of the invention involves performing the steps in the order of (b), (c) and (d).

The method for manufacturing a thermoplastic tank for a vehicle, preferably a thermoplastic fuel tank for a vehicle may further comprise the steps of: (e) moving the first displaceable spacer arranged on the periphery of the cavity of the first mould portion and moving the second displaceable spacer arranged on the periphery of the cavity of the second mould portion into a second position on the axis substantially perpendicular to the extrusion direction of the closed tubular parison, wherein the second position may correspond to the blow moulding tool being partially-open and (f) arranging a third displaceable spacer in a region between the first displaceable spacer and the second displaceable spacer when the blow moulding tool is partially-open, and moving the at least one insertion pin into alignment with the at least one welding means present in each cavity of the first mould portion and the second mould portion.

Furthermore, the method for manufacturing a thermoplastic tank for a vehicle, preferably a thermoplastic fuel tank for a vehicle, may comprise the following steps: (g) performing a first blowing of the closed tubular parison; (h) removing the third displaceable spacer from the at least one insertion pin and (i) positioning the at least one component towards the at least one welding means.

The present invention provides a method for manufacturing a thermoplastic tank for a vehicle, preferably a thermoplastic fuel tank for a vehicle, further comprising steps (h) and (i), which can be performed in any order, or even simultaneously, including performing step (i) before or after step (h). The order in which these steps are performed is not fixed, allowing for flexibility in the implementation of the method. However, the preferred embodiment of the method for manufacturing a thermoplastic tank for a vehicle, preferably a thermoplastic fuel tank for a vehicle, according to the invention involves performing the steps in the order of (h) and (i).

In addition, the method for manufacturing a thermoplastic tank for a vehicle, preferably a thermoplastic fuel tank for a vehicle, may also comprise further steps: (j) moving the first displaceable spacer and the second displaceable spacer farther apart from each other on the axis substantially perpendicular to the extrusion direction of the closed tubular parison; (k) welding the at least one component to the closed tubular parison; (1) removing the at least one insertion pin from the closed tubular parison and, (m) moving the first displaceable spacer arranged on the periphery of the cavity of the first mould portion and moving the second displaceable spacer arranged on the periphery of the cavity of the second mould portion into a third position on the axis substantially perpendicular to the extrusion direction of the closed tubular parison, wherein the third position may correspond to the blow moulding tool being closed.

The advantage of the method for manufacturing a thermoplastic tank for a vehicle, preferably a thermoplastic fuel tank for a vehicle, according to the invention is that it saves material by reducing the thickness of the tank walls while still maintaining structural integrity. This results in a more cost-effective and efficient process.

According to a preferred embodiment of the method for manufacturing a thermoplastic tank for a vehicle, preferably a thermoplastic fuel tank for a vehicle, according to the invention, the step of removing the third displaceable spacer from the at least one insertion pin may comprise a step of splitting the third displaceable spacer into a first displaceable half and a second displaceable half. Beneficially, this results in an improved control over the parison expansion. The first displaceable half and the second displaceable half can be adjusted to provide an optimal amount of space for the insertion pin and ensure that the parison expands uniformly during the blow moulding process.

According to a preferred embodiment of the method for manufacturing a thermoplastic tank for a vehicle, preferably a thermoplastic fuel tank for a vehicle, according to the invention, said method may further comprise a step of performing a second blowing of the closed tubular parison. Advantageously, the second blowing of the parison gives correct shaping and proper cooling for tank manufacturing. In a preferred embodiment, the second blowing of the closed tubular parison is performed after the first blowing (i.e. after step (g)) using the insertion pin.

According to a preferred embodiment of the method for manufacturing a thermoplastic tank for a vehicle, preferably a thermoplastic fuel tank for a vehicle, according to the invention, the at least one component may comprise at least one spring element arranged on one side of the at least one component. Preferably, the at least one spring element may be arranged on both sides of the at least one component. The at least one spring element should be understood as meaning a mechanical component that is designed to provide a certain amount of flexibility. The spring element is used to prevent the component from breaking or being deformed under high pressure exerted by the welding means during the blow moulding process. The spring element can be in the form of a spring, a moving track, or a simple slide, as long as it allows for movement of the component.

According to a preferred embodiment of the method for manufacturing a thermoplastic tank for a vehicle, preferably a thermoplastic fuel tank for a vehicle, according to the invention, the at least one component may have a length equal to or less than a diameter of the closed tubular parison. Having a shorter component can help reduce material usage and minimize waste in the manufacturing process.

According to a preferred embodiment of the method for manufacturing a thermoplastic tank for a vehicle, preferably a thermoplastic fuel tank for a vehicle, according to the invention, the at least one component may be a pillar. The at least one component can be any one of the following: a pillar, a baffle, a carrier, or a valve, but in a preferred embodiment, the at least one component is a pillar. For example, the pillar can provide a reinforcement to the blow moulding tool, which can help to prevent deformation and improve the quality of the thermoplastic fuel tanks produced.

According to a preferred embodiment of the method for manufacturing a thermoplastic tank for a vehicle, preferably a thermoplastic fuel tank for a vehicle, according to the invention, the method is such that, when the blow moulding tool is partially-open, a distance from the first displaceable spacer to the first mould portion may be at least twice a gap between the at least one component and the at least one welding means. When the mould is in the partially-open position with the first displaceable spacer fully extracted out, a weld pad of the component should not touch a weld pad of the tank shell, and there should be enough space to move the component inside the tool. This contributes to an improved efficiency in the production process.

According to a preferred embodiment of the method for manufacturing a thermoplastic tank for a vehicle, preferably a thermoplastic fuel tank for a vehicle, according to the invention, the method is such that, when the blow moulding tool is partially-open, a distance from the second displaceable spacer to the second mould portion may be at least twice a gap between the at least one component and the at least one welding means. When the mould is in the partially-open position with the second displaceable spacer fully extracted out, a weld pad of the component should not touch a weld pad of the tank shell, and there should be enough space to move the component inside the tool. This contributes to an improved efficiency in the production process.

Within the scope of the invention, the distance between the first displaceable spacer and the first mould portion may be the same as the distance between the second displaceable spacer and the second mould portion. However, in some cases, it may be appropriate to use different spacer lengths on each side of the tool, in order to achieve the desired distance between the mould portions and the components. For example, if the component being inserted into the tool is asymmetrical, a different spacer length may be required on each side of the tool, in order to ensure that the component is positioned correctly.

Further objectives, features, and advantages of the blow moulding tool according to the present invention will be apparent from the description below and the appended drawings.

The accompanying drawings illustrate preferred embodiments of the present invention and together with the foregoing invention, serve to provide further understanding of the technical features of the present invention, and thus, the present invention is not intended as being limited to the drawings.
FIG. 1 is a cross-section view of a blow moulding tool in an open position having an extruded closed tubular parison in a mould according to the present invention.
FIG. 2 is a cross-section view of the blow moulding tool in a partially-open position having a third displaceable spacer in a region between a first displaceable spacer and a second displaceable spacer.
FIG. 3A and FIG. 3B is a cross-view and a bottom view of the blow moulding tool in a partially-open position having the third displaceable spacer split into a first displaceable half and a second displaceable half, respectively.
FIG. 4A and FIG. 4B is a cross-view and a bottom view of the blow moulding tool in a partially-open position having at least one component positioned towards at least one welding means, respectively.
FIG. 5 is a cross-section view of the blow moulding tool in a partially-open position having the at least one component welded to the closed tubular parison.
FIG. 6 is a cross-section view of the blow moulding tool in a closed position to form the final shape of a thermoplastic fuel tank.

In the different figures, the same reference signs refer to the same or analogous elements.

Hereinafter, preferred embodiments of the present invention will be described in detail with reference to the accompanying drawings. In the accompanying drawings, the dimensions of the structures are shown in an enlarged scale for clarity of the invention.

Expressions such as "comprising", "is" used to describe and claim the present invention are intended to be constructed in a non-exclusive manner, namely allowing for items, components or elements not explicitly described also to be present.

Additionally, all numerical terms, such as "first", "second", "third" should also be taken only as identifiers, to assist the reader's understanding of the various elements, variations and/or modifications of the present invention, and may not create any limitations, particularly as to the order, or preference, of any element relative to or over another element.

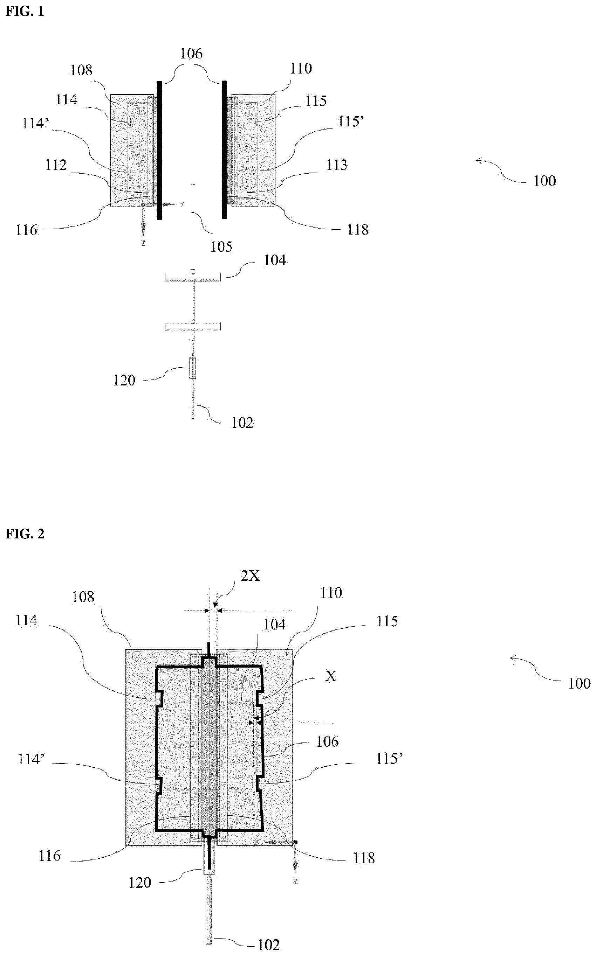

In FIG. 1, the blow moulding tool 100 for manufacturing a thermoplastic fuel tank according to the invention is illustrated.

The blow moulding tool 100 comprises at least one insertion pin 102 that is configured to position at least one component 104 through an opening at a first distal end 105 of a closed tubular parison 106.

The at least one component 104 is inserted into the closed tubular parison 106 through a vertical movement, which is parallel to an extrusion direction of the closed tubular parison 106. Furthermore, the at least one component 104 may have a length equal to or less than the diameter of the closed tubular parison 106, so as to fit into the at least one insertion pin 102. As in the exemplary embodiment represented, the at least one component 104 is a pillar. Alternatively, the at least one component 104 can be any one of the following: a baffle, a carrier, or a valve.

The at least one insertion pin 102 may be configured to position a plurality of components 104 through the opening at the first distal end 105 of the closed tubular parison 106.

The blow moulding tool 100 further comprises a mould. The mould comprises a first mould portion 108 and a second mould portion 110. When the blow moulding tool 100 is open (i.e. the mould is in an open position - a first position), the first mould portion 108 and the second mould portion 110 are fully separated from each other, allowing for the insertion of the closed tubular parison 106 between them, as represented in FIG. 1. Each mould portion 108, 110 comprises a cavity 112, 113 with at least one welding means 114, 114', 115, 115'.

The blow moulding tool 100 also comprises a first displaceable spacer 116 arranged on a periphery of the cavity 112 of the first mould portion 108 and a second displaceable spacer 118 arranged on a periphery of the cavity 113 of the second mould portion 110. The first displaceable spacer 116 and the second displaceable spacer 118 may be configured to move into three positions on an axis substantially perpendicular to the extrusion direction of the closed tubular parison 106. In the exemplary embodiment represented, the first displaceable spacer 116 and the second displaceable spacer 118 are configured to move into a first position (as already mentioned at least in the previous paragraph) along an axis that is oriented at 90 degrees relative to the extrusion direction of the closed tubular parison 116. It should be noted that alternative angles falling within the range of 85 to 95 degrees are also within the scope of consideration.

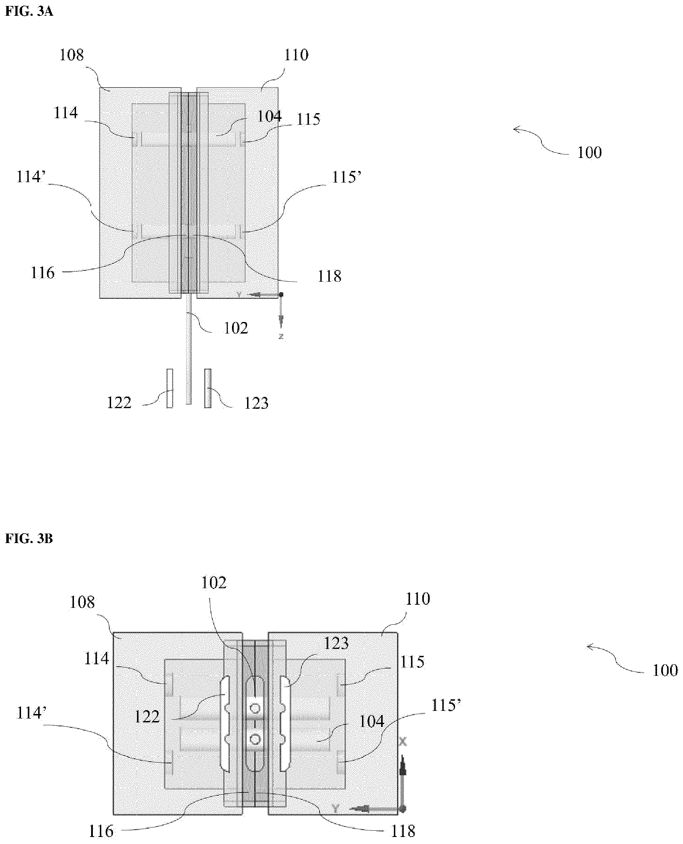

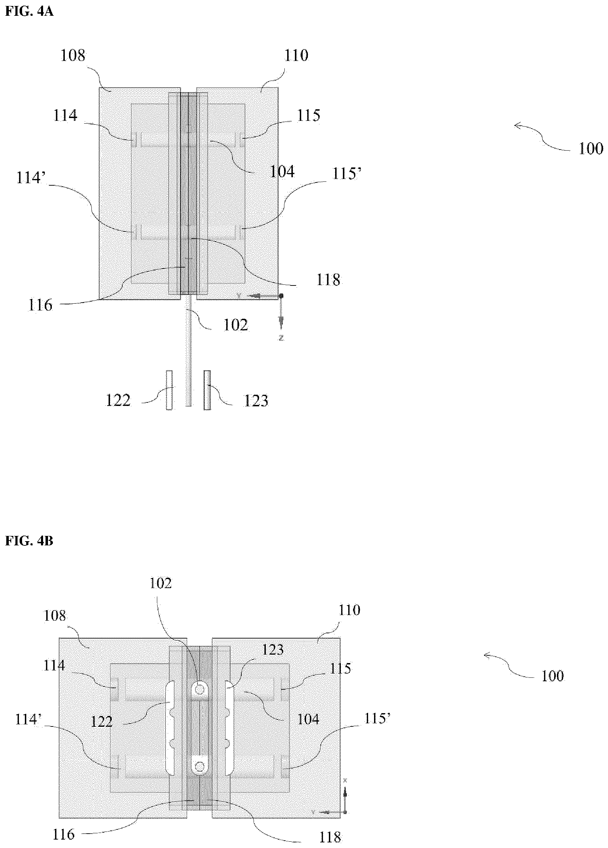

Referring now to FIG. 2, when the blow moulding tool 100 is partially-open (i.e. the mould is in a partially-open position - a second position), the first mould portion 108 and the second mould portion 110 are positioned at a predetermined distance from each other, allowing for the insertion of a third displaceable spacer 120. Hence, the first displaceable spacer 116 and the second displaceable spacer 118 are configured to receive the third displaceable spacer 120 in a region between the first displaceable spacer 116 and the second displaceable spacer 118. The third displaceable spacer 120 comprises a first displaceable half 122 and a second displaceable half 123 (as shown in FIG. 3A), being configured to surround the at least one insertion pin 102 (as illustrated in FIG. 1) and to create a void space inside the closed tubular parison 106 allowing the at least one insertion pin 102 to move and be positioned into alignment with the at least one welding means 114, 114', 115, 115' present in each cavity 112, 113 of the first mould portion 108 and the second mould portion 110 (as presented in FIGS. 4A and 4B).

Moreover, in the exemplary embodiment represented, when the blow moulding tool 100 is partially-open, a distance between the first displaceable spacer 116 to the first mould portion 108 may be at least twice a gap (2X) between the at least one component 104 and the at least one welding means 114, 114', and a distance between the second displaceable spacer 118 to the second mould portion 110 may be at least twice a gap (2X) between the at least one component 104 and the at least one welding means 115, 115'. In some cases, it may be appropriate to use different spacer lengths on each side of the tool 100 in order to achieve the desired distance between the mould portions 108, 110 and the components 104.

This may be particularly necessary when the component 104 being inserted into the tool 100 is asymmetrical, as a different spacer length may be required on each side of the tool 100 to ensure that the component 104 is positioned correctly.

A method for manufacturing a thermoplastic fuel tank is illustrated in FIGS. 1 to 6. In the case of the exemplary embodiment represented in FIG. 1, the method comprises an initial step of providing a closed tubular parison 106 with an opening at a first distal end 105. The closed tubular parison 106 serves as a precursor for the tank and is created by melting and shaping the thermoplastic material using an extruder machine (not shown).

Once the closed tubular parison 106 is extruded, it is placed between a first mould portion 108 and a second mould portion 110 of a mould. Each mould portions 108, 110 comprise a cavity 112, 113 with at least one welding means 114, 114', 115, 115' (as depicted in FIG. 1). In order to position at least one insertion pin 102 within the closed tubular parison 106, the method involves inserting at least one insertion pin through the opening of the first distal end 105 of the closed tubular parison 106. The insertion pin 102 comprises the at least one component 104 to be positioned within the closed tubular parison 106. The at least one component 104 may have a length equal to or less than a diameter of the closed tubular parison 106. In the exemplary embodiment represented, the at least one component 104 is a pillar. Alternatively, the at least one component 104 can be any one of the following: a baffle, a carrier, or a valve. A pre-blowing step may be performed involving an introduction of pressurized air into the closed tubular parison 106, causing the closed tubular parison 106 to expand and inflate.

Additionally, the at least one component 104 may comprise at least one spring element arranged on one side of the at least one component 104. Preferably, the at least one spring element may be arranged on both sides of the at least one component 104. The spring element can be in the form of a spring, a moving track, or a simple slide, as long as it allows for movement of the component 104.

A first displaceable spacer 116 arranged on a periphery of the cavity 112 of the first mould portion 108 and a second displaceable spacer 118 arranged on a periphery of the cavity 113 of the second mould portion 110 then move into a first position along an axis that is oriented at 90 degrees relative to an extrusion direction of the closed tubular parison 106, wherein the first position corresponds to the blow moulding tool 100 being open. It is worth noting that angles ranging from 85 to 95 degrees are also viable options for consideration.

Furthermore, it should be noted that the order in which the steps of placing the closed tubular parison 106 between the mould portions 108, 110, inserting the at least one insertion pin 102 through the opening of the first distal end 105 of the closed tubular parison 106 and moving the displaceable spacers 116, 118 into a first position are performed is not fixed, and they can be performed in any sequence or even simultaneously. This allows for flexibility in the implementation of the method.

In a further method step, which is illustrated in FIG. 2, the first displaceable spacer 116 arranged on the periphery of the cavity 112 of the first mould portion 108 and a second displaceable spacer 118 arranged on the periphery of the cavity 113 of the second mould portion 110 move into a second position along the axis that is oriented at 90 degrees relative to the extrusion direction of the closed tubular parison 106, wherein the second position corresponds to the blow moulding tool 100 being partially-open. It is worth noting that angles ranging from 85 to 95 degrees are also viable options for consideration. When the blow moulding tool 100 is partially-open, a third displaceable spacer 120 is arranged in a region between the first displaceable spacer 116 and the second displaceable spacer 118 and the at least one insertion pin 102 moves into alignment with the at least one welding means 114, 114', 115, 115' present in each cavity 112, 113 of the first mould portion 108 and the second mould portion 110.

During the partially-open state of the blow moulding tool 100, a distance from the first displaceable spacer 116 to the first mould portion 108 may be at least twice a gap (2X) between the at least one component 104 and the at least one welding means 114, 114'. Correspondingly, a distance from the second displaceable spacer 118 to the second mould portion 110 may be at least twice (2X) a gap between the at least one component 104 and the at least one welding means 115, 115'. The distance between the first displaceable spacer 116 and the first mould portion 108 may be the same as the distance between the second displaceable spacer 118 and the second mould portion 110. However, in some cases, it may be appropriate to use different spacer lengths on each side of the tool 100, in order to achieve the desired distance between the mould portions 108, 110 and the components 104. For example, if the component 104 being inserted into the tool 100 is asymmetrical, a different spacer length may be required on each side of the tool 100, in order to ensure that the component 104 is positioned correctly.

Continuously referring to FIG. 2, after arranging the third displaceable spacer 120 between the first displaceable spacer 116 and the second displaceable spacer 118, a first blowing of the closed tubular parison 106 is performed. The pre-blowing step may be performed prior to the first blowing step and involves the introduction of pressurized air into the closed tubular parison 106, causing the closed tubular parison 106 to expand and inflate. Following that, the third displaceable spacer 120 is removed from the at least one insertion pin 102 (as can be seen in particular from FIGS. 3A and 4A). As revealed by FIGS. 4A and 4B, the at least one component 104 is positioned towards the at least one welding means 114, 114', 115, 115'.

However, it should be noted that the order in which the steps of performing a first blowing of the closed tubular parison 106, removing the third displaceable spacer 120 from the at the at least one insertion pin 102 and positioning the at least one component 104 towards the at least one welding means 114, 114', 115, 115' are performed is not fixed, and they can be performed in any sequence. This allows for flexibility in the implementation of the method.

In addition, the step of removing the third displaceable spacer 120 from the at the at least one insertion pin 102 comprises a step of splitting the third displaceable spacer 120 into a first displaceable half 122 and a second displaceable half 123, as is shown in FIGS. 3A and 4A.

The method may further comprise a step of performing a second blowing of the closed tubular parison 106 in order to give correct shaping and proper cooling for tank manufacturing. Preferably, the second blowing of the closed tubular parison 106 is performed after the first blowing using the at least one insertion pin 102.

After the at least one component 104 is positioned near the at least one welding means at 114, 114', 115, 115', the first displaceable spacer 116 and the second displaceable spacer 118 move farther apart from each other along the axis that is oriented at 90 degrees relative to the extrusion direction of the closed tubular parison 106 (not show). It should be noted that alternative angles falling within the range of 85 to 95 degrees are also within the scope of consideration.

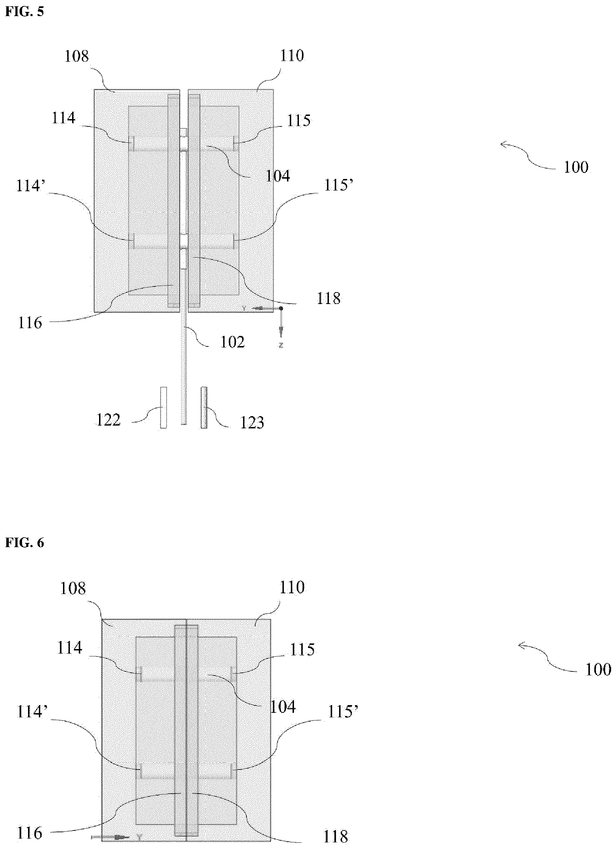

In a further method step, the at least one component 104 is welded to the closed tubular parison 106; therefore, a tank weld pad and the at least one component 104 weld pad touch, as depicted in FIG. 5. Subsequently, the at least one insertion pin 102 is removed from the closed tubular parison 106 (not shown).

Finally, FIG. 6 shows the first displaceable spacer 116 arranged on the periphery of the cavity 112 of the first mould portion 108 and the second displaceable spacer 118 arranged on the periphery of the cavity 113 of the second mould portion 110 moving along the axis that is oriented at 90 degrees relative to the extrusion direction of the closed tubular parison 106, assuming a third position. As already mentioned at the beginning, it is worth noting that angles ranging from 85 to 95 degrees are also viable options for consideration.

The third position corresponds to the blow moulding tool 100 being closed (i.e. the mould is in a closed position); thus, the first mould portion 108 and the second mould portion 110 are brought into contact to define a sealed cavity 112, 113 around the closed tubular parison 106, whereby the mould portions 108, 110 are in intimate contact with each other to form the final shape of the thermoplastic tank, preferably a thermoplastic fuel tank. Once the method for manufacturing the thermoplastic tank, preferably the thermoplastic fuel tank, is complete, the mould is opened, and the tank is removed from the mould.

### NUMERICAL REFERENCES TO FIGURES

100: Blow moulding tool
102: Insertion pin
104: Component
105: First distal end
106: Closed tubular parison
108: First mould portion
110: Second mould portion
112: Cavity of the first mould portion
113: Cavity of the second mould portion
114, 114': Welding means present in the cavity of the first mould portion
115, 115': Welding means present in the cavity of the second mould portion
116: First displaceable spacer
118: Second displaceable spacer
120: Third displaceable spacer
122: First displaceable half
123: Second displaceable half

## Claims

1. A blow moulding tool (100) for manufacturing a thermoplastic tank for a vehicle, the blow moulding tool (100) comprising:
▪ at least one insertion pin (102) configured to position at least one component (104) through an opening at a first distal end (105) of a closed tubular parison (106);
▪ a mould configured to receive the closed tubular parison (106), wherein the mould comprises at least
- a first mould portion (108) and a second mould portion (110) and the mould portions (108, 110) each comprise a cavity (112, 113) with at least one welding means (114, 114', 115, 115');
- a first displaceable spacer (116) arranged on a periphery of the cavity (112) of the first mould portion (108);
- a second displaceable spacer (118) arranged on a periphery of the cavity (113) of the second mould portion (110);
- wherein the first displaceable spacer (116) and the second displaceable spacer (118) configured to move into each of a first position, a second position and a third position on an axis substantially perpendicular to an extrusion direction of the closed tubular parison (106);
- the first position corresponding to the blow moulding tool (100) being open;
- the second position corresponding to the blow moulding tool (100) being partially-open, and the third position corresponding to the blow moulding tool (100) being closed;
- when the blow moulding tool (100) is partially-open, the first displaceable spacer (116) and the second displaceable spacer (118) are configured to receive a third displaceable spacer (120) in a region between the first displaceable spacer (116) and the second displaceable spacer (118), and
- wherein the third displaceable spacer (120) comprises a first displaceable half (122) and a second displaceable half (123), the third displaceable spacer (120) being configured to surround the at least one insertion pin (102) and to create a void space inside the closed tubular parison (106) allowing the at least one insertion pin (102) to move and be positioned into alignment with the at least one welding means (114, 114', 115, 115') present in each cavity (112, 113) of the first mould portion (108) and the second mould portion (110).

2. The blow moulding tool (100) according to claim 1, wherein the at least one insertion pin (102) is configured to position a plurality of components (104) through the opening at the first distal end (105) of the closed tubular parison (106).

3. The blow moulding tool (100) according to claims 1 or 2, wherein when the blow moulding tool (100) is partially-open, a distance between the first displaceable spacer (116) to the first mould portion (108) is at least twice a gap between the at least one component (104) and the at least one welding means (114, 114').

4. The blow moulding tool (100) according to any one of claims 1 to 3, wherein when the blow moulding tool (100) is partially-open, a distance between the second displaceable spacer (118) to the second mould portion (110) is twice a gap between the at least one component (104) and the at least one welding means (115, 115').

5. A method for manufacturing a thermoplastic tank for a vehicle, the method comprising at least the steps of:
▪ providing a closed tubular parison (106) with an opening at a first distal end (105);
▪ placing the closed tubular parison (106) between a first mould portion (108) and a second mould portion (110) of a mould, wherein the first mould portion (108) and the second mould portion (110) each comprise a cavity (112, 113) with at least one welding means (114, 114', 115, 115');
▪ inserting at least one insertion pin (102) through the opening of the first distal end (105) of the closed tubular parison (106), wherein the at least one insertion pin (102) comprises at least one component (104) to be positioned in the closed tubular parison (106);
▪ moving a first displaceable spacer (116) arranged on a periphery of the cavity (112) of the first mould portion (108) and moving a second displaceable spacer (118) arranged on a periphery of the cavity (113) of the second mould portion (110) into a first position on an axis substantially perpendicular to an extrusion direction of the closed tubular parison (106), wherein the first position corresponds to the blow moulding tool (100) being open;
▪ moving the first displaceable spacer (116) arranged on the periphery of the cavity (112) of the first mould portion (108) and moving the second displaceable spacer (118) arranged on the periphery of the cavity (113) of the second mould portion (110) into a second position on the axis substantially perpendicular to the extrusion direction of the closed tubular parison (106), wherein the second position corresponds to the blow moulding tool (100) being partially-open;
▪ arranging a third displaceable spacer (120) in a region between the first displaceable spacer (116) and the second displaceable spacer (118) when the blow moulding tool (100) is partially-open, and moving the at least one insertion pin (102) into alignment with the at least one welding means (114, 114', 115, 115') present in each cavity (112, 113) of the first mould portion (108) and the second mould portion (110);
▪ performing a first blowing of the closed tubular parison (106);
▪ removing the third displaceable spacer (120) from the at least one insertion pin (102);
▪ positioning the at least one component (104) towards the at least one welding means (114, 114', 115, 115');
▪ moving the first displaceable spacer (116) and the second displaceable spacer (118) farther apart from each other on the axis substantially perpendicular to the extrusion direction of the closed tubular parison (106);
▪ welding the at least one component (104) to the closed tubular parison (106);
▪ removing the at least one insertion pin (102) from the closed tubular parison (106);
▪ moving the first displaceable spacer (116) arranged on the periphery of the cavity (112) of the first mould portion (108) and moving the second displaceable spacer (118) arranged on the periphery of the cavity (113) of the second mould portion (110) into a third position on the axis substantially perpendicular to the extrusion direction of the closed tubular parison (106), wherein the third position corresponds to the blow moulding tool (100) being closed.

6. The method according to claim 5, wherein the step of removing the third displaceable spacer (120) from the at least one insertion pin (102) comprises a step of:
splitting the third displaceable spacer (120) into a first displaceable half (122) and a second displaceable half (123).

7. The method according to claims 5 or 6 further comprising a step of:
performing a second blowing of the closed tubular parison (106).

8. The method according to any one of claims 5 to 7, wherein the at least one component (104) comprises at least one spring element arranged on one side of the at least one component (104), preferably arranged on both sides of the at least one component (104).

9. The method according to any one of claims 5 to 8, wherein the at least one component (104) has a length equal to or less than a diameter of the closed tubular parison (106).

10. The method according to any one of claims 5 to 9, wherein the at least one component (104) is a pillar.

11. The method according to any one of claims 5 to 10, wherein when the blow moulding tool (100) is partially-open, a distance from the first displaceable spacer (116) to the first mould portion (108) is at least twice a gap between the at least one component (104) and the at least one welding means (114, 114').

12. The method according to any one of claims 5 to 11, wherein when the blow moulding tool (100) is partially-open, a distance from the second displaceable spacer (118) to the second mould portion (110) is at least twice a gap between the at least one component (104) and the at least one welding means (115, 115').

## Patentansprüche

1. Blasformwerkzeug (100) zur Herstellung eines thermoplastischen Tanks für ein Fahrzeug, wobei das Blasformwerkzeug (100) Folgendes aufweist:
▪ mindestens einen Einsetzstift (102), der konfiguriert ist, um mindestens eine Komponente (104) durch eine Öffnung an einem ersten distalen Ende (105) eines geschlossenen rohrförmigen Vorformlings (106) zu positionieren;
▪ eine Form, die konfiguriert ist, um den geschlossenen rohrförmigen Vorformling (106) aufzunehmen, wobei die Form mindestens aufweist:
- einen ersten Formabschnitt (108) und einen zweiten Formabschnitt (110) und wobei die Formabschnitte (108, 110) jeweils einen Hohlraum (112, 113) mit mindestens einem Schweißmittel (114, 114', 115, 115') aufweisen;
- einen ersten verschiebbaren Abstandshalter (116), der an einer Peripherie des Hohlraums (112) des ersten Formabschnitts (108) angeordnet ist;
- einen zweiten verschiebbaren Abstandshalter (118), der an einem Rand des Hohlraums (113) des zweiten Formabschnitts (110) angeordnet ist;
- wobei der erste verschiebbare Abstandshalter (116) und der zweite verschiebbare Abstandshalter (118) so konfiguriert sind, dass sie sich jeweils in eine erste Position, eine zweite Position und eine dritte Position auf einer Achse bewegen, die im Wesentlichen senkrecht zu einer Extrusionsrichtung des geschlossenen röhrenförmigen Vorformlings (106) ist;
- wobei die erste Position, die dem Blasformwerkzeug (100) entspricht, offen ist;
- wobei die zweite Position, die dem Blasformwerkzeug (100) entspricht, teilweise geöffnet ist, und die dritte Position, die dem Blasformwerkzeug (100) entspricht, geschlossen ist;
- wenn das Blasformwerkzeug (100) teilweise geöffnet ist, der erste verschiebbare Abstandshalter (116) und der zweite verschiebbare Abstandshalter (118) konfiguriert sind, um einen dritten verschiebbaren Abstandshalter (120) in einem Bereich zwischen dem ersten verschiebbaren Abstandshalter (116) und dem zweiten verschiebbaren Abstandshalter (118) aufzunehmen, und
- wobei der dritte verschiebbare Abstandshalter (120) eine erste verschiebbare Hälfte (122) und eine zweite verschiebbare Hälfte (123) aufweist, der dritte verschiebbare Abstandshalter (120) so konfiguriert ist, dass er den mindestens einen Einsetzstift (102) umgibt und einen Leerraum innerhalb des geschlossenen rohrförmigen Vorformlings (106) erzeugt, der es dem mindestens einen Einsetzstift (102) ermöglicht, sich zu bewegen und in Ausrichtung mit dem mindestens einen Schweißmittel (114, 114', 115, 115') zu positionieren, das in jedem Hohlraum (112, 113) des ersten Formabschnitts (108) und des zweiten Formabschnitts (110) vorhanden ist.

2. Blasformwerkzeug (100) nach Anspruch 1, wobei der mindestens eine Einsetzstift (102) so konfiguriert ist, dass er eine Vielzahl von Komponenten (104) durch die Öffnung am ersten distalen Ende (105) des geschlossenen röhrenförmigen Vorformlings (106) positioniert.

3. Blasformwerkzeug (100) nach Anspruch 1 oder 2, wobei bei teilweise geöffnetem Blasformwerkzeug (100) der Abstand zwischen dem ersten verschiebbaren Abstandshalter (116) und dem ersten Formabschnitt (108) mindestens doppelt so groß ist wie der Abstand zwischen der mindestens einen Komponente (104) und dem mindestens einen Schweißmittel (114, 114').

4. Blasformwerkzeug (100) nach einem der Ansprüche 1 bis 3, wobei bei teilweise geöffnetem Blasformwerkzeug (100) der Abstand zwischen dem zweiten verschiebbaren Abstandshalter (118) und dem zweiten Formabschnitt (110) doppelt so groß ist wie der Abstand zwischen der mindestens einen Komponente (104) und dem mindestens einen Schweißmittel (115, 115').

5. Verfahren zur Herstellung eines thermoplastischen Tanks für ein Fahrzeug, wobei das Verfahren mindestens die folgenden Schritte aufweist:
▪ Bereitstellen eines geschlossenen röhrenförmigen Vorformlings (106) mit einer Öffnung an einem ersten distalen Ende (105);
▪ Anordnen des geschlossenen röhrenförmigen Vorformlings (106) zwischen einem ersten Formabschnitt (108) und einem zweiten Formabschnitt (110) einer Form, wobei der erste Formabschnitt (108) und der zweite Formabschnitt (110) jeweils einen Hohlraum (112, 113) mit mindestens einem Schweißmittel (114, 114', 115, 115') aufweisen;
▪ Einsetzen von mindestens einem Einsetzstift (102) durch die Öffnung des ersten distalen Endes (105) des geschlossenen rohrförmigen Vorformlings (106), wobei der mindestens eine Einsetzstift (102) mindestens eine Komponente (104) aufweist, die in dem geschlossenen rohrförmigen Vorformling (106) zu positionieren ist;
▪ Bewegen eines ersten verschiebbaren Abstandshalters (116), der an einer Peripherie des Hohlraums (112) des ersten Formabschnitts (108) angeordnet ist, und Bewegen eines zweiten verschiebbaren Abstandshalters (118), der an einer Peripherie des Hohlraums (113) des zweiten Formabschnitts (110) angeordnet ist, in eine erste Position auf einer Achse, die im Wesentlichen senkrecht zu einer Extrusionsrichtung des geschlossenen röhrenförmigen Vorformlings (106) ist, wobei die erste Position dem offenen Zustand des Blasformwerkzeugs (100) entspricht;
▪ Bewegen des ersten verschiebbaren Abstandshalters (116), der an der Peripherie des Hohlraums (112) des ersten Formabschnitts (108) angeordnet ist, und Bewegen des zweiten verschiebbaren Abstandshalters (118), der an der Peripherie des Hohlraums (113) des zweiten Formabschnitts (110) angeordnet ist, in eine zweite Position auf der Achse im Wesentlichen senkrecht zur Extrusionsrichtung des geschlossenen röhrenförmigen Vorformlings (106), wobei die zweite Position dem teilweise geöffneten Blasformwerkzeug (100) entspricht;
▪ Anordnen eines dritten verschiebbaren Abstandshalters (120) in einem Bereich zwischen dem ersten verschiebbaren Abstandshalter (116) und dem zweiten verschiebbaren Abstandshalter (118), wenn das Blasformwerkzeug (100) teilweise geöffnet ist, und Bewegen des mindestens einen Einsetzstifts (102) in Ausrichtung mit dem mindestens einen Schweißmittel (114, 114', 115, 115'), das in jedem Hohlraum (112, 113) des ersten Formabschnitts (108) und des zweiten Formabschnitts (110) vorhanden ist;
▪ Durchführen eines ersten Aufblasens des geschlossenen rohrförmigen Vorformlings (106);
▪ Entfernen des dritten verschiebbaren Abstandshalters (120) von dem mindestens einen Einsetzstift (102);
▪ Positionieren der mindestens einen Komponente (104) in Richtung des mindestens einen Schweißmittels (114, 114', 115, 115');
▪ Bewegen des ersten verschiebbaren Abstandshalters (116) und des zweiten verschiebbaren Abstandshalters (118) weiter voneinander weg auf der Achse, die im Wesentlichen senkrecht zur Extrusionsrichtung des geschlossenen rohrförmigen Vorformlings (106) ist;
▪ Verschweißen der mindestens einen Komponente (104) mit dem geschlossenen rohrförmigen Vorformling (106);
▪ Entfernen des mindestens einen Einsetzstift (102) aus dem geschlossenen rohrförmigen Vorformling (106);
▪ Bewegen des ersten verschiebbaren Abstandshalters (116), der an der Peripherie des Hohlraums (112) des ersten Formabschnitts (108) angeordnet ist, und Bewegen des zweiten verschiebbaren Abstandshalters (118), der an der Peripherie des Hohlraums (113) des zweiten Formabschnitts (110) angeordnet ist, in eine dritte Position auf der Achse, die im Wesentlichen senkrecht zur Extrusionsrichtung des geschlossenen röhrenförmigen Vorformlings (106) ist, wobei die dritte Position dem Schließen des Blasformwerkzeugs (100) entspricht.

6. Verfahren nach Anspruch 5, wobei der Schritt des Entfernens des dritten verschiebbaren Abstandshalters (120) von dem mindestens einen Einsetzstift (102) einen Schritt aufweist:
Aufspalten des dritten verschiebbaren Abstandshalters (120) in eine erste verschiebbare Hälfte (122) und eine zweite verschiebbare Hälfte (123).

7. Verfahren nach Anspruch 5 oder 6 ferner aufweisend einen Schritt:
Durchführen eines zweiten Aufblasens des geschlossenen röhrenförmigen Vorformlings (106).

8. Verfahren nach einem der Ansprüche 5 bis 7, wobei die mindestens eine Komponente (104) mindestens ein Federelement aufweist, das auf einer Seite der mindestens einen Komponente (104), vorzugsweise auf beiden Seiten der mindestens einen Komponente (104), angeordnet ist.

9. Verfahren nach einem der Ansprüche 5 bis 8, wobei die mindestens eine Komponente (104) eine Länge hat, die gleich oder kleiner ist als der Durchmesser des geschlossenen rohrförmigen Vorformlings (106).

10. Verfahren nach einem der Ansprüche 5 bis 9, wobei die mindestens eine Komponente (104) eine Säule ist.

11. Verfahren nach einem der Ansprüche 5 bis 10, wobei bei teilweise geöffnetem Blasformwerkzeug (100) der Abstand zwischen dem ersten verschiebbaren Abstandshalter (116) und dem ersten Formabschnitt (108) mindestens doppelt so groß ist wie der Abstand zwischen der mindestens einen Komponente (104) und dem mindestens einen Schweißmittel (114, 114').

12. Verfahren nach einem der Ansprüche 5 bis 11, wobei bei teilweise geöffnetem Blasformwerkzeug (100) der Abstand zwischen dem zweiten verschiebbaren Abstandshalter (118) und dem zweiten Formabschnitt (110) mindestens doppelt so groß ist wie der Abstand zwischen der mindestens einen Komponente (104) und dem mindestens einen Schweißmittel (115, 115').

## Revendications

1. Outil de moulage par soufflage (100) pour la fabrication d'un réservoir en thermoplastique pour un véhicule, l'outil de moulage par soufflage (100) comprenant :
▪ au moins une goupille d'insertion (102) configurée pour positionner au moins un composant (104) à travers une ouverture à une première extrémité distale (105) d'une paraison tubulaire fermée (106) ;
▪ un moule configuré pour recevoir la paraison tubulaire fermée (106), dans lequel le moule comprend au moins
- une première partie de moule (108) et une seconde partie de moule (110) et les parties de moule (108, 110) comprennent chacune une cavité (112, 113) avec au moins un moyen de soudage (114, 114', 115, 115') ;
- une première entretoise déplaçable (116) disposée sur une périphérie de la cavité (112) de la première partie du moule (108) ;
- une seconde entretoise déplaçable (118) disposée sur une périphérie de la cavité (113) de la seconde partie de moule (110) ;
- dans lequel la première entretoise déplaçable (116) et la seconde entretoise déplaçable (118) configurées pour se déplacer dans chacune d'une première position, d'une seconde position et d'une troisième position sur un axe sensiblement perpendiculaire à une direction d'extrusion de la paraison tubulaire fermée (106) ;
- la première position correspondant à l'outil de moulage par soufflage (100) étant ouvert ;
- la deuxième position correspondant à l'outil de moulage par soufflage (100) étant partiellement ouvert, et la troisième position correspondant à l'outil de moulage par soufflage (100) étant fermé ;
- lorsque l'outil de moulage par soufflage (100) est partiellement ouvert, la première entretoise déplaçable (116) et la seconde entretoise déplaçable (118) sont configurées pour recevoir une troisième entretoise déplaçable (120) dans une région située entre la première entretoise déplaçable (116) et la seconde entretoise déplaçable (118), et
- dans lequel la troisième entretoise déplaçable (120) comprend une première moitié déplaçable (122) et une seconde moitié déplaçable (123), la troisième entretoise déplaçable (120) étant configurée pour entourer l'au moins une goupille d'insertion (102) et pour créer un vide à l'intérieur de la paraison tubulaire fermée (106) permettant à l'au moins une goupille d'insertion (102) de se déplacer et d'être positionnée en alignement avec l'au moins un moyen de soudage (114, 114', 115, 115') présent dans chaque cavité (112, 113) de la première partie du moule (108) et de la deuxième partie du moule (110).

2. Outil de moulage par soufflage (100) selon la revendication 1, dans lequel l'au moins une goupille d'insertion (102) est configurée pour positionner une pluralité de composants (104) à travers l'ouverture à la première extrémité distale (105) de la paraison tubulaire fermée (106).

3. Outil de moulage par soufflage (100) selon les revendications 1 ou 2, dans lequel, lorsque l'outil de moulage par soufflage (100) est partiellement ouvert, une distance entre la première entretoise déplaçable (116) et la première partie du moule (108) est d'au moins deux fois un espace entre l'au moins un composant (104) et l'au moins un moyen de soudage (114, 114').

4. Outil de moulage par soufflage (100) selon l'une quelconque des revendications 1 à 3, dans lequel, lorsque l'outil de moulage par soufflage (100) est partiellement ouvert, une distance entre la seconde entretoise déplaçable (118) et la seconde partie de moule (110) est égale à deux fois un espace entre l'au moins un composant (104) et l'au moins un moyen de soudage (115, 115').

5. Procédé de fabrication d'un réservoir en thermoplastique pour un véhicule, le procédé comprenant au moins les étapes consistant à :
▪ fournir une paraison tubulaire fermée (106) avec une ouverture à une première extrémité distale (105) ;
▪ placer la paraison tubulaire fermée (106) entre une première partie de moule (108) et une seconde partie de moule (110) d'un moule, dans laquelle la première partie de moule (108) et la seconde partie de moule (110) comprennent chacune une cavité (112, 113) avec au moins un moyen de soudage (114, 114', 115, 115') ;
▪ insérer au moins une goupille d'insertion (102) à travers l'ouverture de la première extrémité distale (105) de la paraison tubulaire fermée (106), dans laquelle l'au moins une goupille d'insertion (102) comprend au moins un composant (104) à positionner dans la paraison tubulaire fermée (106) ;
▪ déplacer une première entretoise déplaçable (116) disposée sur une périphérie de la cavité (112) de la première partie de moule (108) et déplacer une seconde entretoise déplaçable (118) disposée sur une périphérie de la cavité (113) de la seconde partie de moule (110) dans une première position sur un axe sensiblement perpendiculaire à une direction d'extrusion de la paraison tubulaire fermée (106), dans lequel la première position correspond à l'outil de moulage par soufflage étant ouvert (100) ;
▪ déplacer la première entretoise déplaçable (116) disposée à la périphérie de la cavité (112) de la première partie de moule (108) et déplacer la seconde entretoise déplaçable (118) disposée à la périphérie de la cavité (113) de la seconde partie de moule (110) dans une seconde position sur l'axe sensiblement perpendiculaire à la direction d'extrusion de la paraison tubulaire fermée (106), dans lequel la deuxième position correspond à l'outil de moulage par soufflage (100) étant partiellement ouvert ;
▪ disposer une troisième entretoise déplaçable (120) dans une zone située entre la première entretoise déplaçable (116) et la seconde entretoise déplaçable (118) lorsque l'outil de moulage par soufflage (100) est partiellement ouvert, et aligner l'au moins une goupille d'insertion (102) avec l'au moins un moyen de soudage (114, 114', 115, 115') présents dans chaque cavité (112, 113) de la première partie du moule (108) et de la seconde partie du moule (110) ;
▪ réaliser d'un premier soufflage de la paraison tubulaire fermée (106) ;
▪ retirer la troisième entretoise déplaçable (120) de l'au moins une goupille d'insertion (102) ;
▪ positionner l'au moins un composant (104) vers l'au moins un moyen de soudage (114, 114', 115, 115') ;
▪ éloigner la première entretoise déplaçable (116) et la seconde entretoise déplaçable (118) l'une de l'autre sur l'axe sensiblement perpendiculairement à la direction d'extrusion de la paraison tubulaire fermée (106) ;
▪ souder l'au moins un composant (104) à la paraison tubulaire fermée (106) ;
▪ retirer l'au moins une goupille d'insertion (102) de la paraison tubulaire fermée (106) ;
▪ déplacer la première entretoise déplaçable (116) disposée sur la périphérie de la cavité (112) de la première partie de moule (108) et déplacer la seconde entretoise déplaçable (118) disposée sur la périphérie de la cavité (113) de la seconde partie de moule (110) dans une troisième position sur l'axe sensiblement perpendiculaire à la direction d'extrusion de la paraison tubulaire fermée (106), la troisième position correspondant l'outil de moulage soufflage (100) étant fermé.

6. Procédé selon la revendication 5, dans lequel l'étape consistant à retirer la troisième entretoise déplaçable (120) de l'au moins une goupille d'insertion (102) comprend une étape consistant à :
diviser la troisième entretoise déplaçable (120) en une première moitié déplaçable (122) et une seconde moitié déplaçable (123).

7. Procédé selon les revendications 5 ou 6, comprenant en outre une étape consistant à :
réaliser un second soufflage de la paraison tubulaire fermée (106).

8. Procédé selon l'une quelconque des revendications 5 à 7, dans lequel l'au moins un composant (104) comprend au moins un élément de ressort disposé d'un côté de l'au moins un composant (104), disposé de préférence des deux côtés de l'au moins un composant (104).

9. Procédé selon l'une quelconque des revendications 5 à 8, dans lequel l'au moins un composant (104) a une longueur égale ou inférieure à un diamètre de la paraison tubulaire fermée (106).

10. Procédé selon l'une quelconque des revendications 5 à 9, dans lequel l'au moins un composant (104) est un pilier.

11. Procédé selon l'une quelconque des revendications 5 à 10, dans lequel, lorsque l'outil de moulage par soufflage (100) est partiellement ouvert, une distance entre la première entretoise déplaçable (116) et la première partie du moule (108) est d'au moins deux fois un espace entre l'au moins un composant (104) et l'au moins un moyen de soudage (114, 114').

12. Procédé selon l'une quelconque des revendications 5 à 11, dans lequel, lorsque l'outil de moulage par soufflage (100) est partiellement ouvert, une distance entre la seconde entretoise déplaçable (118) et la seconde partie du moule (110) est d'au moins deux fois un espace entre l'au moins un composant (104) et l'au moins un moyen de soudage (115, 115').
